# EUROPEAN PATENT APPLICATION

(11) **EP 4 749 406 A1**
(43) Date of publication of application: **27.05.2026**
(21) Application number: 25215456.2
(22) Date of filing: 30.06.2021
(51) Int. Cl.: G06F 3/01, G06F 3/16

(54) **INTERFACE CONTROL METHOD AND APPARATUS, AND SYSTEM**

(62) Divisional of application: 21947583.7
(71) Applicant: Shenzhen Yinwang Intelligent Technologies Co., Ltd., Shenzhen, Guangdong 518110 (CN)
(72) Inventor: XIAO, Yubo, Shenzhen, 518110 (CN); NIE, Weiran, Shenzhen, 518110 (CN); XU, Dongxing, Shenzhen, 518110 (CN)
(74) Representative: Pfenning, Meinig & Partner mbB

(57) **Abstract**

This application provides an interface control method. The method includes: obtaining a speech instruction of a user and a sound source location of the user; obtaining line-of-sight information of the user; determining a target window on an interface based on the sound source location and the line-of-sight information; and controlling the target window based on the speech instruction. According to the interface control method in this application, collaborative decision-making is performed with reference to multimode information such as sound source information, line-of-sight tracking information, speech semantic information, and priorities thereof, so that page content in a plurality of windows on the interface is quickly and accurately controlled, to improve user experience.

## Description

### TECHNICAL FIELD

Embodiments of this application relate to the human-machine interaction field, and more specifically, to an interface control method and apparatus and a system.

### BACKGROUND

With development of science and technology, a smart head unit has more abundant functions such as navigation, mobile phone interconnection, speech control, a built-in application (application, APP), and an in-vehicle network. This brings more convenient and intelligent driving experience to a user. A head unit interface is a main medium for interaction between the user and an intelligent vehicle. The user may control the head unit interface by using a touch operation or a speech instruction, to implement interaction with the intelligent vehicle. If the user controls the head unit interface by using the touch operation, the user needs to lean down to perform an operation. An operation with a complex procedure takes long time, resulting in an increase in an accident risk. If the user controls the head unit interface by using the speech instruction, driving safety can be ensured. Therefore, when the user controls the head unit interface by using the speech instruction, it is particularly important to improve user experience.

### SUMMARY

Embodiments of this application provide an interface control method and apparatus. Collaborative decision-making is performed with reference to multimode information such as sound source information, line-of-sight tracking information, speech semantic information, and priorities thereof, so that page content in a plurality of windows on an interface is quickly and accurately controlled, to improve user experience.

According to a first aspect, an interface control method is provided. The method includes: obtaining a speech instruction of a user and a sound source location of the user; obtaining line-of-sight information of the user; determining a target window on an interface based on the sound source location and the line-of-sight information; and controlling the target window based on the speech instruction.

According to the interface control method in this application, the target window that is to be controlled by the user is determined by using multimode information such as speech semantics of the user, the sound source location of the user, and the line-of-sight information of the user. Then, the target window is controlled based on the speech instruction, so that the user accurately controls any window on a plurality of head unit interfaces, to improve user experience.

In some possible implementations, the target window is closest to the sound source location and is located in a line-of-sight direction indicated by the line-of-sight information.

According to the interface control method in this application, both the sound source location and the line-of-sight information of the user are considered, so that the determined target window is indeed the window that is to be controlled by the user, to improve accuracy.

In some possible implementations, a window closest to the sound source location is a first window, and a window located in the line-of-sight direction indicated by the line-of-sight information is a second window. The determining a target window on an interface based on the sound source location and the line-of-sight information includes: determining the target window based on a priority of the sound source location and a priority of the line-of-sight information. When the priority of the sound source location is higher than the priority of the line-of-sight information, the first window is the target window, and when the priority of the line-of-sight information is higher than the priority of the sound source location, the second window is the target window.

In some possible implementations, the priority of the sound source location and the priority of the line-of-sight information are predefined.

In some possible implementations, the sound source location has first priority information, the line-of-sight information has second priority information. The first priority information is used to determine the priority of the sound source location, and the second priority information is used to determine the priority of the line-of-sight information.

In some possible implementations, the method further includes: obtaining an execution result of the speech instruction; and adjusting the first priority information and the second priority information based on the execution result.

In some possible implementations, there is a first correlation between the sound source location and a service indicated by the speech instruction, and there is a second correlation between the sound source location and the service indicated by the speech instruction.

In some possible implementations, the method further includes: adjusting the first correlation and the second correlation based on the execution result of the speech instruction.

According to the interface control method in this application, it may be further considered that when target windows separately determined based on the semantics, the sound source location, and the line-of-sight information of the user are inconsistent, the target window may be determined based on priorities of the semantics, the sound source location, and the line-of-sight information of the user. This can avoid a case that the speech instruction of the user cannot be executed caused by the fact that the target windows separately determined based on the semantics, the sound source location, and the line-of-sight information of the user are inconsistent. In addition, the priorities of the semantics, the sound source location, and the line-of-sight information of the user may be adjusted based on an execution result, to better adapt to a habit of the user.

In some possible implementations, the controlling the target window based on the speech instruction includes: displaying, in the target window, an icon corresponding to the service indicated by the speech instruction, where the icon includes one or more indexes.

In some possible implementations, the method further includes: displaying, in the target window, an icon corresponding to a first service, where the icon includes one or more indexes. The speech instruction indicates a target index, the target index belongs to the one or more indexes. The controlling the target window based on the speech instruction includes: performing a target operation that is of the first service and that is indicated by the target index.

The interface control method in this application further includes: displaying an index of an icon in the target window. The index of the icon is simpler and more eye-catching than specific text information, to facilitate recognition and selection by the user, avoid the user from distracting too much attention, and improve driving safety.

According to a second aspect, an interface control method is provided. The method includes: obtaining a first speech instruction of a user, where the first speech instruction indicates a first service; displaying an icon of the first service in a target window, where the icon includes a plurality of indexes; obtaining a second speech instruction of the user, where the second speech instruction indicates a target index, and the target index belongs to the plurality of indexes; and executing a task that is of the first service and that corresponds to the target index.

In some possible implementations, the target window is a window closest to the user or a window in a line-of-sight direction of the user.

According to a third aspect, an interface control apparatus is provided. The interface control apparatus includes: an obtaining unit, configured to obtain a speech instruction of a user and a sound source location of the user, where the obtaining unit is further configured to obtain line-of-sight information of the user; and a processing unit, configured to determine a target window on an interface based on the sound source location and the line-of-sight information. The processing unit is further configured to control the target window based on the speech instruction.

In some possible implementations, the target window is closest to the sound source location and is located in a line-of-sight direction indicated by the line-of-sight information.

In some possible implementations, a window closest to the sound source location is a first window, and a window located in the line-of-sight direction indicated by the line-of-sight information is a second window. The processing unit is specifically configured to determine the target window based on a priority of the sound source location and a priority of the line-of-sight information. When the priority of the sound source location is higher than the priority of the line-of-sight information, the first window is the target window; or when the priority of the line-of-sight information is higher than the priority of the sound source location, the second window is the target window.

In some possible implementations, the priority of the sound source location and the priority of the line-of-sight information are predefined.

In some possible implementations, the sound source location has first priority information, the line-of-sight information has second priority information. The first priority information is used to determine the priority of the sound source location, and the second priority information is used to determine the priority of the line-of-sight information.

In some possible implementations, the apparatus is further configured to: obtain an execution result of the speech instruction; and adjust the first priority information and the second priority information based on the execution result.

In some possible implementations, there is a first correlation between the sound source location and a service indicated by the speech instruction, and there is a second correlation between the line-of-sight information and the service indicated by the speech instruction.

In some possible implementations, the apparatus is further configured to adjust the first correlation and the second correlation based on the execution result of the speech instruction.

In some possible implementations, an execution unit is specifically configured to display, in the target window, an icon corresponding to the service indicated by the speech instruction. The icon includes one or more indexes.

In some possible implementations, the apparatus is further configured to display, in the target window, an icon corresponding to a first service, where the icon includes one or more indexes. The speech instruction indicates a target index, the target index belongs to the one or more indexes. The controlling the target window based on the speech instruction includes: performing a target operation that is of the first service and that is indicated by the target index.

According to a fourth aspect, an interface control apparatus is provided. The interface control apparatus includes: an obtaining unit, configured to obtain a first speech instruction of a user, where the first speech instruction indicates a first service; and a processing unit, configured to display an icon of the first service in the target window, where the icon includes a plurality of indexes. The obtaining unit is further configured to obtain a second speech instruction of the user, where the second speech instruction indicates a target index, and the target index belongs to the plurality of indexes. The processing unit is further configured to execute a task that is of the first service and that corresponds to the target index.

In some possible implementations, the target window is a window closest to the user or a window in a line-of-sight direction of the user.

According to a fifth aspect, an interface control apparatus is provided. The interface control apparatus includes a processor and a memory. The memory is configured to store program instructions, and the processor is configured to invoke the program instructions to perform the method according to any one of the implementations of the first aspect and the second aspect.

According to a sixth aspect, an interface control apparatus is provided. The interface control apparatus includes a processor and a data interface. The processor reads, through the data interface, instructions stored in a memory, to perform the method according to any one of the implementations of the first aspect and the second aspect.

According to a seventh aspect, a vehicle is provided. The vehicle includes the apparatus according to any one of the implementations of the third aspect and the fourth aspect.

According to the interface control method in this application, the target window that is to be controlled by the user is determined by using multimode information such as speech semantics of the user, the sound source location of the user, and the line-of-sight information of the user. Then, the target window is controlled based on the speech instruction, so that the user accurately controls any window on a plurality of head unit interfaces, to improve user experience. According to the interface control method in this application, it may be further considered that when target windows separately determined based on the semantics, the sound source location, and the line-of-sight information of the user are inconsistent, the target window may be determined based on priorities of the semantics, the sound source location, and the line-of-sight information of the user. This can avoid a case that the speech instruction of the user cannot be executed caused by the fact that the target windows separately determined based on the semantics, the sound source location, and the line-of-sight information of the user are inconsistent. In addition, the priorities of the semantics, the sound source location, and the line-of-sight information of the user may be adjusted based on an execution result, to better adapt to a habit of the user. The interface control method in this application further includes: displaying an index of an icon in the target window. The index of the icon is simpler and more eye-catching than specific text information, to facilitate recognition and selection by the user, avoid the user from distracting too much attention, and improve driving safety.

### BRIEF DESCRIPTION OF DRAWINGS

FIG. 1 is a schematic diagram of an internal structure of a vehicle according to an embodiment of this application;
FIG. 2 is a schematic diagram of an example of an application architecture of an interface control method according to an embodiment of this application;
FIG. 3 is a schematic diagram of an example module in an interface control method according to an embodiment of this application;
FIG. 4 is a schematic flowchart of determining a target window based on semantics, a sound source location, and line-of-sight information of a user according to an embodiment of this application;
FIG. 5 is a schematic flowchart of an interface control method according to an embodiment of this application;
FIG. 6 is a schematic diagram of three possible icons according to an embodiment of this application;
FIG. 7 is a schematic diagram of controlling a head unit interface by a user in a driver's seat according to an embodiment of this application;
FIG. 8 is a schematic diagram of controlling a head unit interface by a user in a front passenger's seat according to an embodiment of this application;
FIG. 9 is a schematic diagram of controlling a rear-row head unit interface by a user in a driver's seat according to an embodiment of this application;
FIG. 10 is a schematic diagram of an interface having a plurality of windows according to an embodiment of this application;
FIG. 11 is a schematic flowchart of controlling an interface by using a speech instruction by a user according to an embodiment of this application;
FIG. 12 is a schematic flowchart of another interface control method according to an embodiment of this application;
FIG. 13 is a schematic block diagram of an interface control apparatus according to an embodiment of this application; and
FIG. 14 is a schematic block diagram of an interface control device according to an embodiment of this application.

### DESCRIPTION OF EMBODIMENTS

The following describes technical solutions of embodiments in this application with reference to accompanying drawings.

Intelligent terminals are increasingly widely applied in life. For example, the intelligent terminal may be a smartphone, various intelligent appliances in a smart home, or an intelligent vehicle. These intelligent devices are increasingly widely used in people's life. To facilitate interaction between a person and an intelligent terminal, a display interface is usually disposed in the intelligent terminal, to conveniently display, to a user, prompt information or information required for the user, for example, text information, picture information, or video information. Therefore, with wide use of the intelligent terminals, a scenario in which there are a plurality of display interfaces in same space appears. The display interfaces may be display interfaces of different intelligent terminals or display interfaces of a same intelligent terminal. For example, a foldable mobile phone has at least two display screens, an audio and video device in a smart home may have a plurality of display screens, or a plurality of display screens may be provided for a user in a cockpit of an intelligent vehicle. Therefore, use requirements of different passengers are met. An interface is controlled by using a speech instruction to free hands of a user. In this case, the user can control the intelligent terminal without touching the intelligent terminal, and user experience is improved. Therefore, controlling the intelligent terminal by using the speech instruction becomes a main human-machine interaction manner. In addition, controlling a head unit interface (namely, a display screen in a cockpit) by using the speech instruction can improve driving safety better than that by using a touch operation. Therefore, the speech instruction becomes a main manner of controlling the head unit interface in a driving process.

In an existing manner of controlling an intelligent terminal by using a speech instruction, semantic analysis is performed on the speech instruction to determine an operation indicated by the speech instruction. However, with increasing scenarios in which there are a plurality of display interfaces in same space, in this speech control manner, a display interface for executing the speech instruction is usually different from a display interface on which the user actually expects to execute the speech instruction, resulting in poor user experience.

For example, more intelligent terminals each use a large screen or a long screen. The large screen or the long screen may support a split-screen mode. To be specific, the large screen or the long screen may be used as one display interface, or may be split into a plurality of display interfaces for use by different users. A display screen in a cockpit of a vehicle is used as an example. A long screen may be disposed in front of a driver and a front passenger. The long screen supports a split-screen mode. The split-screen mode may be understood as a scenario supported by a head unit system. To be specific, a plurality of application areas (which may also be referred to as windows or display interfaces) are simultaneously displayed on one screen. Herein, two application areas are used as an example, and are used by the driver and the front passenger to independently operate respective applications. When an interface is split into a primary screen (which may also be referred to as a primary application area, a primary window, a primary display interface, or the like) and a secondary screen (which may also be referred to as a secondary application area, a secondary window, a secondary display interface, or the like), whether a speech instruction of a user acts on the primary screen or the secondary screen cannot be determined based on an existing speech control technology. In addition, when there are a plurality of display interfaces in same space, the existing speech control technology is not flexible enough. For example, only control on a focus interface can be supported. The focus interface is an interface that is closest to the user and that is controlled by using the speech instruction. Consequently, the user cannot flexibly control a required interface (for example, an interface far away from the user) by using the speech instruction, resulting in poor user experience.

Therefore, embodiments of this application provide an interface control method. Collaborative decision-making is performed with reference to multimode information, so that content on an interface required for a user is more accurately controlled, to improve user experience. The multimode information may include at least two types of information such as sound source location information, line-of-sight information of a user, semantic information of a speech instruction, and interface display information.

In the following embodiments of this application, the interface control method is described by using a scenario of an intelligent cockpit of a vehicle as an example. However, embodiments of this application are not limited thereto. The method may alternatively be applied to another scenario in which split-screen control or multi-interface control is performed, for example, a control scenario of a smart home device, a smartphone, or the like.

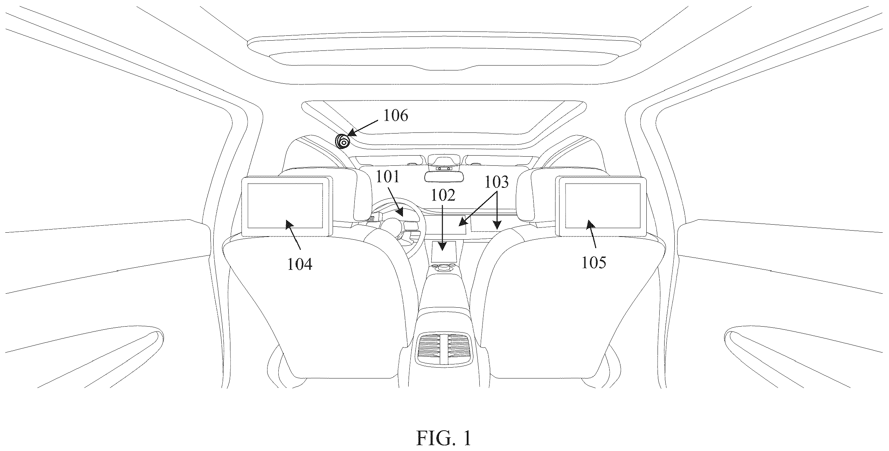

FIG. 1 is a schematic diagram of an internal structure of a vehicle according to an embodiment of this application. In the vehicle, an in-vehicle terminal such as a head unit (which is also referred to as an in-vehicle audio and video entertainment system) may be disposed in a center console of the vehicle, and a screen of the center console may also be referred to as a central display screen or a central display screen. In addition, for some high-end vehicles, comprehensive digital display is gradually applied in a cockpit. One or more display screens are disposed in the cockpit, and are configured to display content such as a digital dashboard and an in-vehicle entertainment system. As shown in FIG. 1, a plurality of display screens, for example, a digital dashboard display screen 101, a central display screen 102, and a display screen 103 in front of a front seat passenger (which is also referred to as a front passenger), are disposed in the cockpit. The display screen 103 may be a split screen. As shown in FIG. 1, the display screen 103 is split into two screens: a display screen 104 in front of a rear passenger on a left side and a display screen 105 in front of a rear passenger on a right side. In addition, in FIG. 1, although only one camera 106 is shown close to an A pillar (pillar) on a driver side, a plurality of cameras may be disposed in the cockpit, and locations of the cameras are flexible. For example, some cameras in the cockpit may be disposed above the central display screen in the vehicle, some cameras in the cockpit may be disposed on a left side of the central display screen in the vehicle, some cameras in the cockpit may be disposed on the A pillar or a B pillar, and some cameras in the cockpit may be disposed in the front of the cockpit top in the vehicle. It should be understood that the vehicle further includes one or more microphones (not shown in FIG. 1), and the microphones may be located above the central display screen in the vehicle or in the front of the cockpit top in the vehicle. In the interface control method in embodiments of this application, the camera may obtain line-of-sight information, action information, or the like of a user, and the microphone may obtain speech information of the user and perform collaborative decision-making based on the obtained information about the user. In this way, the user can control the plurality of display screens in the vehicle.

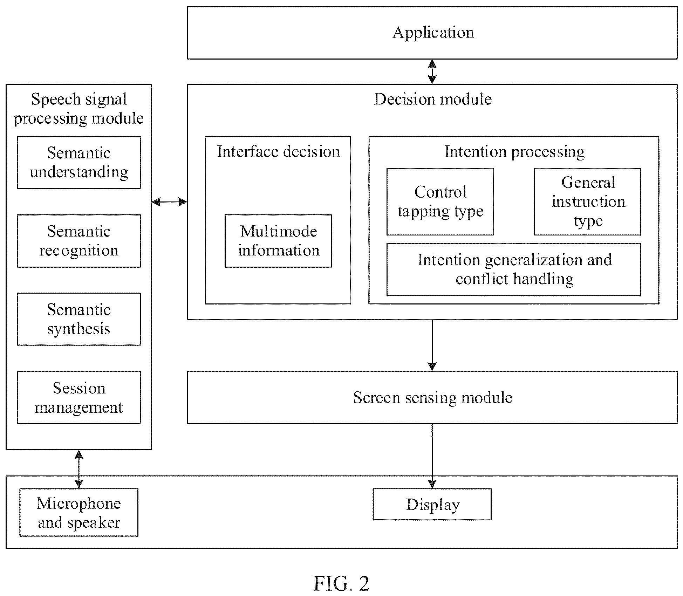

FIG. 2 is a schematic diagram of an application architecture of an interface control method according to an embodiment of this application. A head unit application scenario is used as an example. As shown in FIG. 2, a head unit system includes a display device, a speech sensor, a speech player, and a processing module. The processing module includes a speech signal processing module (which may also be referred to as a speech service module) and a decision module. A speech assistant application may be installed on a head unit, and the head unit performs speech interaction with a user by using the speech signal processing module. After the head unit obtains a speech of the user, the speech signal processing module performs operations such as language understanding and semantic recognition on the speech of the user, converts the speech of the user into an instruction that can be recognized by the head unit, and executes the instruction. Further, the speech signal processing module may generate a corresponding response based on a specific execution action, perform speech synthesis on the response, and then report the response to the user through dialog management, to respond to a speech instruction of the user. In this way, multi-round speech interaction between the head unit and the user is implemented. The head unit may obtain a speech signal of the user by using the speech sensor, for example, a microphone. In addition, the head unit may output the speech signal by using the speech player, for example, a speaker. In this process, the user may control the head unit interface by using a speech. The decision module is configured to implement collaborative decision-making based on multimode information, which is referred to as multimode decision-making for short. The decision module jointly determines, based on the multimode information, an intention of the user and an interface corresponding to the intention, and then processes the intention of the user, to implement an operation on the corresponding interface. The multimode information is the same as that in the foregoing descriptions. Details are not described herein again. The decision module may further include an interface decision unit and an intention processing unit. The interface decision unit is configured to determine, based on at least one type of information in the multimode information, an interface corresponding to an intention of the user. The intention processing unit is configured to determine, based on the at least one type of information in the multimode information, the intention of the user, and process the intention of the user, including at least one of tapping on a control on the interface (the intention is referred to as a control tapping type intention), an operation of a general instruction (the intention is referred to as a general instruction type intention), intention generalization, conflict handling, and the like. The general instruction is at least one of a series of global interface control instructions such as flicking up (or down), flipping up (or down), returning, and back that are input by a speech when the interface is in a flickable or flippable state. The intention generalization is a capability of corpus extension and knowledge graph to a specific extent. For example, if a control poster that can be tapped on the interface is *xx movie,* the user can add some prefixes, for example, "I want to watch *xx movie"* or "Help me open *xx movie".* Alternatively, the user can add some suffixes, for example, "Help me open *xx movie,* please" or generalization of some suffix modal words. The knowledge graph indicates content related to target content. For example, if the control poster on the current interface is *xx movie,* a corresponding action can be performed on the *xx movie* on the interface when the user says a director or a main actor of the *xx movie.* For example, information about the director or the main actor of the *xx movie* is displayed or played. The conflict handling is handling performed when a conflict occurs when a speech instruction of the user is executed on the current interface. For example, for a window opened on the current interface, when the user says a speech instruction "Close", the speech instruction indicates to tap a close button of the window on the current interface or indicates to close a global instruction of the entire application. In this case, the intention processing unit may process these instructions that may cause a conflict. After the intention of the user is converted into a specific instruction, an operation is performed on the application based on the instruction. The head unit system may further include a screen sensing module (which may also be referred to as an interface sensing module), configured to sense interface information in the multimode information, for example, an attribute of a control on the interface, for example, at least one of attributes such as a text displayed on the control, coordinates of the control, and whether the control can be tapped. It can be learned that the screen sensing module is configured to provide the interface information in the multimode information.

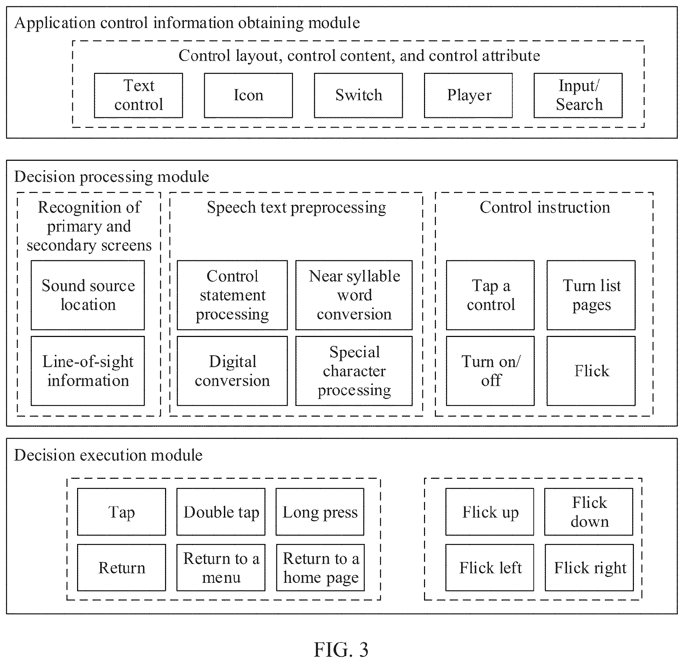

An application control information obtaining module is further included between the decision module and the application in FIG. 2. The decision module in FIG. 2 may be specifically divided into a decision processing module and a decision execution module. FIG. 3 shows the three modules. The application control information obtaining module and the decision execution module may be disposed on a terminal side, and the decision processing module may be disposed on a terminal side or a cloud side. It should be understood that when the application control information obtaining module, the decision execution module, and the decision processing module are disposed on the terminal side, the application control information obtaining module, the decision execution module, and the decision processing module may be specifically processors on the terminal side (for example, an intelligent device). When the decision processing module is disposed on the cloud side, the decision processing module may be specifically a server on the cloud side, or the like. The server may be a physical server, or may be a virtual server. The application control information obtaining module is configured to obtain control information of the application, including a control layout, control content, a control attribute, and the like, for example, text information, an icon, a switch, a player, and an input/search. An obtaining manner includes application reporting, the screen sensing module, and the like. The application control information obtaining module inputs the collected interface information, line-of-sight tracking information, sound source location information, and semantic information together to a see-and-speak processing module. The decision processing module is configured to determine a target window, and perform intention matching with reference to application control information of the target window, to determine a control instruction. The determining target control includes: determining the target window based on a sound source location and line-of-sight information. The performing intention matching with reference to application control information of the target window includes: processing a control statement in the control information, converting a near syllable word, performing digital conversion, and processing a special character. Finally, the determined control instruction includes instructions such as tapping a control, turning list pages, turning on/off, and flicking. The decision processing module is mostly disposed on the cloud. To improve an instruction execution speed in an application such as the head unit, the decision processing module is deployed on the terminal side. This greatly improves instruction execution experience in a scenario in which a network is poor in a driving process. After receiving an execution packet delivered by the decision module, the decision execution module selects a corresponding execution manner based on a specific execution packet, including tapping (for example, single tapping, double tapping, long pressing, or the like), returning (including returning to a previous page, returning to a menu, returning to a home page, or the like), and flicking (flicking up, flicking down, flicking left, flicking right, or the like).

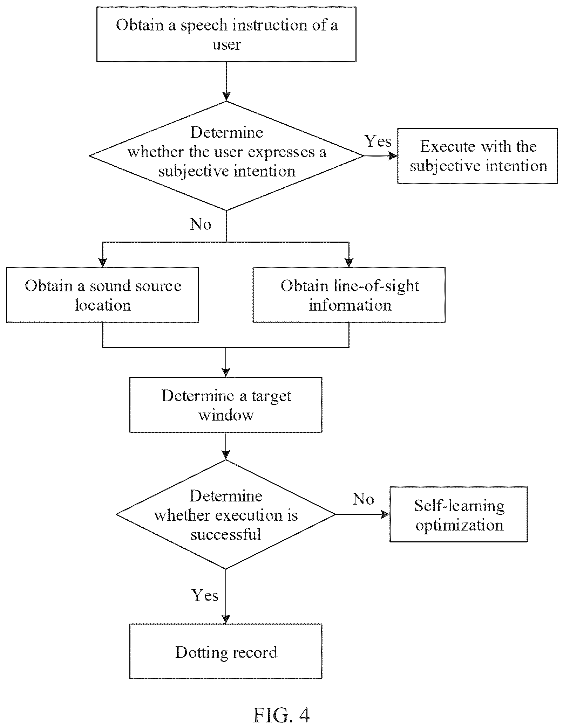

FIG. 4 is a schematic flowchart of determining a target window (or an interface) based on semantics, a sound source location, and line-of-sight information of a user according to an embodiment of this application. As shown in FIG. 4, after a speech instruction of a user is obtained, a target window and a target service are determined based on semantic information, a sound source location, and/or line-of-sight information of the user, to perform an operation related to the target service in the target window.

The speech instruction of the user is first obtained, and then semantic recognition is performed based on the speech instruction of the user, to obtain semantics of the user. Herein, the speech instruction of the user may be recognized by using a plurality of types of semantic recognition technologies, for example, may be recognized by using a deep fully convolutional neural network (deep fully convolutional neural network, DFCNN), an LFR-DFSMN (lower frame rate deep feedforward sequential memory network), or a streaming multi-layer truncated attention model (streaming truncated multi-layer attention, SMLTA).

Then, whether the user directly expresses a subjective intention by using the speech instruction or whether the user directly indicates the target window by using the speech instruction may be determined based on the semantics of the user. For example, a head unit interface is split into a driver screen and a front passenger screen. If the speech instruction of the user is "Open music on the driver screen", semantics of the user clearly defines a subjective intention. To be specific, a target window that is to be controlled is the driver screen. The driver screen is directly controlled based on the subjective intention of the user. Optionally, the semantic information of the user in the multimode information may be set to be prior to other information of the user. However, in an actual application, other information of the user may alternatively be set to be prior to the semantic information, or a priority of the semantic information may be set to be adjustable by the user. In other words, in an application process, the user may adjust the priority of the semantic information based on an actual requirement.

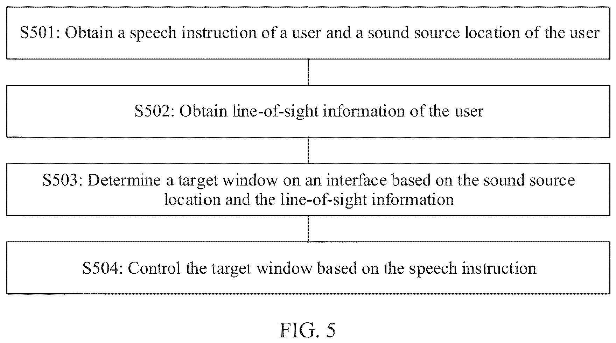

If the speech instruction of the user does not express a subjective intention, the target window that is to be controlled cannot be directly determined from the semantics of the user. In this case, the target window that is to be controlled by the user is determined based on the other information of the user, for example, based on the sound source location of the user and/or the line-of-sight information of the user. Alternatively, whether the speech instruction of the user expresses a subjective intention may not be determined, but the target window that is to be controlled by the user is directly determined based on the sound source location of the user and/or the line-of-sight information of the user. For a method for determining, based on the sound source location of the user and/or the line-of-sight information of the user, the target window that is to be controlled by the user, refer to the following descriptions in FIG. 5.

After the target window that is to be controlled by the user is determined, the speech instruction of the user is executed in the target window. Specifically, a control intention of the user is obtained based on the speech instruction of the user, and then the control intention of the user is executed in the target window based on the obtained control information of the application, for example, tapping a control, flicking, and turning pages. Then, whether the speech instruction of the user is successfully executed in the target window is determined. If the speech instruction of the user is successfully executed in the target window, dotting is performed to record that the speech instruction is successfully executed. Optionally, if the speech instruction of the user fails to be executed in the target window, self-learning optimization is performed. For example, a priority of the sound source location and a priority of the line-of-sight information are adjusted based on an execution result of the speech instruction. For details, refer to the following descriptions of step 504 in FIG. 5.

With reference to FIG. 5, the following describes an interface control method based on a sound source location of a user and/or line-of-sight information of the user according to an embodiment of this application.

FIG. 5 is a schematic flowchart of an interface control method 500 based on a sound source location of a user and/or line-of-sight information of the user according to an embodiment of this application. As shown in FIG. 5, the method includes step 501 to step 504, which are separately described below. For ease of description, an example in which an application scenario of the interface control method in the following descriptions is control on a head unit interface is used. In this case, the interface control method 500 is performed by a head unit. However, it should be understood that the interface control method in this embodiment of this application may further be applied to scenarios of a plurality of other interfaces. In this case, the interface control method 500 is performed by another intelligent terminal.

S501: Obtain a speech instruction of a user and a sound source location of the user.

Specifically, the sound source location of the user may be obtained by using a sound source positioning method. For example, a microphone in a specific direction from which a current sound source comes may be comprehensively determined based on energy (strong/weak) of speech signals collected by a plurality of microphones (for example, microphones in front left, front right, rear left, and rear right directions) in different directions in a cockpit and a preprocessed sound source positioning algorithm. For another example, a microphone array technology is used. A plurality of microphones are arranged according to a specific rule. The plurality of microphones synchronously collect sound signals, and a location at which a noise source signal is sent is obtained based on a signal phase difference between the plurality of microphones. For another example, a sound field test technology of a sound intensity probe is used. The sound intensity probe is a combination of two microphones disposed opposite to each other, and can measure sound pressure of a plurality of points in space, and a magnitude and a direction of a sound wave vibration velocity, and perform a scanning test on a surface of a measured object or near an envelope surface, to obtain a sound field distribution situation near the measured object and then obtain the sound source location and sound source distribution.

S502: Obtain line-of-sight information of the user.

Specifically, the line-of-sight information of the user may be obtained by using a line-of-sight tracking method. For example, some eye structures and features whose relative locations remain unchanged when eyeballs of the user rotate may be used as references. A line-of-sight change parameter is extracted between a location change feature and the invariant features, and then a line-of-sight direction is obtained by using a geometric model or a mapping model, to determine a location of a target window at which a line of sight of the user is located. Optionally, only when the line of sight of the user stays on an interface (a window) for duration that is greater than a preset threshold, it is considered that the user has an intention of controlling the interface (the window). This reduces false determining of the target window caused when the user does not have the intention of controlling the interface window but the line of sight of the user stays for short duration.

S503: Determine the target window on the interface based on the sound source location and the line-of-sight information.

As shown in FIG. 4, the target window on the interface may be determined based on the sound source location of the user and the line-of-slight information of the user. The target window is an interface (or a window) that is to be controlled by the user. In this case, the target window is closest to the sound source location of the user and is located in a line-of-sight direction indicated by the line-of-sight information of the user. In other words, in this case, a window closest to the sound source location of the user is the same as a window viewed by the line of sight of the user.

However, in some cases, the window closest to the sound source location of the user may be different from the window viewed by the line of sight of the user. The window closest to the sound source location of the user is denoted as a first window, and the window located in the line-of-sight direction indicated by the line-of-sight information of the user is denoted as a second window. The first window is different from the second window. In this case, the target window is determined based on a priority of the sound source location and a priority of the line-of-sight information. When the sound source location is prior to the line-of-sight information, the first window is used as the target window. When the line-of-sight information is prior to the sound source location, the second window is used as the target window. The priority of the sound source location and the priority of the line-of-sight information are preset. For example, in consideration of a habit of the user, or based on statistical historical data of the user, the sound source location may be set to be prior to the line-of-sight information or the line-of-sight information may be set to be prior to the sound source location during factory settings. Herein, that the sound source location is prior to the line-of-sight information or the line-of-sight information is prior to the sound source location may be reflected by the priority of the sound source location and the priority of the line-of-sight information. Optionally, the user may adjust the priority of the sound source location and the priority of the line-of-sight information based on a requirement.

S504: Control the target window based on the speech instruction.

Specifically, a control intention of the user is obtained based on the speech instruction of the user, and then the control intention of the user is executed in the target window based on the obtained control information of the application, for example, tapping a control, flicking, and turning pages in FIG. 3.

Optionally, if the control intention of the user fails to be executed in the target window, self-learning optimization is performed, for example, the priority of the sound source location and the priority of the line-of-sight information are adjusted based on an execution result of the speech instruction. For example, the head unit system may further include a self-learning module. The self-learning module adjusts the priority of the sound source location and the priority of the line-of-sight information based on the execution result of the speech instruction. The priorities may be determined and adjusted by setting and adjusting priority information. For example, the sound source location has first priority information, and the line-of-sight information has second priority information. The first priority information is used to determine the priority of the sound source location, for example, may be a weight or a confidence level of the sound source location. The second priority information is used to determine the priority of the line-of-sight information, for example, may be a weight or a confidence level of the line-of-sight information.

In addition, there is a first correlation between the sound source location and a service indicated by the speech instruction of the user, and there is a second correlation between the line-of-sight information and the service indicated by the speech instruction of the user. The priority information of the sound source location and the priority information of the line-of-sight information may be the correlations, or the priority information may be independent of the correlations. In this case, the priority of the sound source location and the priority of the line-of-sight information may be determined based on the priority information and the correlations. Therefore, the method in this embodiment of this application further includes: adjusting the first priority information and the second priority information based on the execution result of the speech instruction of the user in the target window, and/or adjusting the first correlation and the second correlation based on the execution result of the speech instruction of the user in the target window. For example, the first priority information preset for the sound source location is 60%, and the second priority information preset for the line-of-sight information is 40%. In this case, the first priority information is higher than the second priority information. Therefore, the sound source location is prior to the line-of-sight information. When the window closest to the sound source location of the user is different from the window viewed by the line of sight of the user, the window closest to the sound source location of the user is used as the target window. However, in this case, if the speech instruction fails to be executed in the window closest to the sound source location of the user, the first priority information is appropriately reduced. For example, the first priority information is reduced to 58%, and the second priority information is appropriately increased. For example, the second priority information is increased to 42%. However, in this case, the first priority information is still higher than the second priority information. When the window closest to the sound source location of the user is different from the window viewed by the line of sight of the user, the window closest to the sound source location of the user is still used as the target window. If the speech instruction fails to be executed, for a plurality of times, in the window closest to the sound source location of the user, the first priority information and the second priority information may be adjusted for a plurality of times. If the first priority information is reduced to 48%, and the second priority information is increased to 52%, the second priority information is higher than the first priority information. In this case, the line-of-sight information is prior to the sound source location. When the window closest to the sound source location of the user is different from the window viewed by the line of sight of the user, the window viewed by the line of sight of the user is used as the target window. In addition, the sound source location and the line-of-sight information are further related to the service indicated by the speech instruction of the user. Specifically, there is the first correlation between the sound source location and the service indicated by the speech instruction of the user, and there is the second correlation between the line-of-sight information and the service indicated by the speech instruction of the user. For example, when the speech instruction of the user is "Play a movie", the movie should be displayed, based on a general habit, in the line-of-sight direction indicated by the line-of-sight information of the user. Therefore, for the "Play a movie" service, the first correlation may be preset to 20%, and the second correlation may be preset to 80%. This is similar to the adjustment of the first priority information and the second priority information. If the speech instruction "Play a movie" fails to be executed in the window in the line-of-sight direction indicated by the line-of-sight information of the user, the first correlation is appropriately increased, and the second correlation is appropriately reduced. If the first correlation is higher than the second correlation after adjustment is performed for a plurality of times, the speech instruction "Play a movie" of the user is executed in the window closest to the sound source location of the user. Adjustment of the first priority information, the second priority information, the first correlation, and the second correlation may adapt to a control habit of the user, to improve user experience.

It should be understood that specific values of the first priority information, the second priority information, the first correlation, and the second correlation are merely examples, and each may alternatively be a decimal or an integer, or in another form.

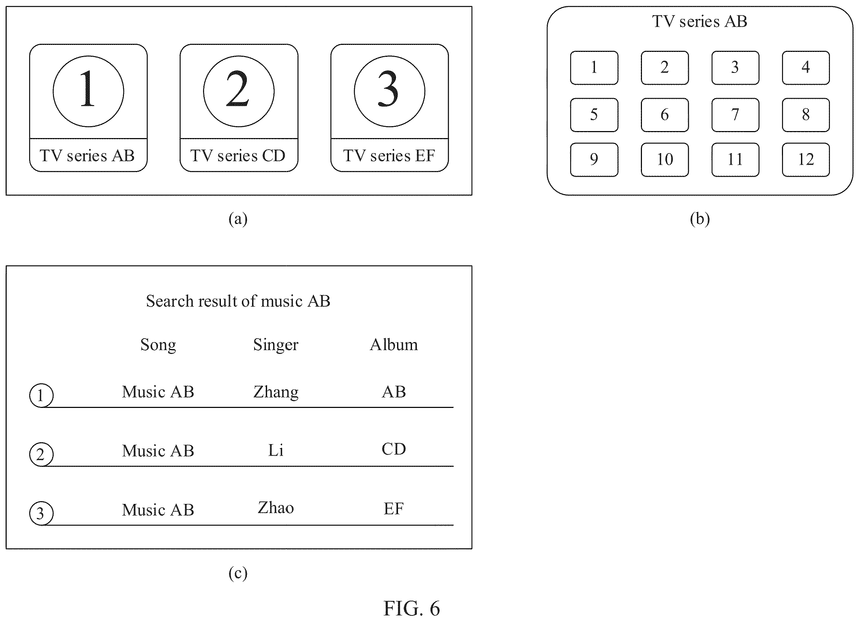

In some cases, for example, on a song selection interface, names of some songs are excessively long, or names of some songs include symbols, foreign words, and the like. Consequently, it is difficult for the user to express the names by using a speech. In addition, if the user spends too much attention on text recognition on the interface, driving safety is reduced. Therefore, the method in this embodiment of this application further includes: displaying an icon in the target window, where the icon includes one or more indexes, the speech instruction of the user indicates a target index, and the target index belongs to one of the one or more indexes. FIG. 6 is a schematic diagram of two possible icons. It should be understood that FIG. 6 shows merely examples of forms of indexes of the possible icons in this embodiment of this application, and does not constitute a limitation on this application. The interface in (a) in the figure includes three icons. Each icon indicates one TV series, a name of the TV series may be displayed below each icon, and each icon includes one index. For example, an index of a first icon is ①, an index of a second icon is ②, and an index of a third icon is ③. In an actual application, the user does not need to say a name of a TV series on the interface, but only needs to say an index of an icon of the TV series that is to be opened, to open the icon. The interface in (b) in the figure includes one icon. The icon indicates a TV series, the icon includes 12 indexes, and each index indicates an episode of the TV series. In an actual application, the user only needs to say a corresponding index to open an episode that the user wants to watch. The interface in (c) in the figure includes one icon. The icon indicates a search result of a song, and the icon includes three indexes. The indexes are presented in a list form, and each index indicates a search result of the song "music AB". Each search result corresponds to a same name of the song, but different singers or albums. When the user says a corresponding index, a song that the user wants to open may be opened. According to the method in this embodiment of this application, after the speech instruction of the user is obtained, the icon indicated by the speech instruction of the user may be displayed in the target window. For example, a corresponding interface is opened only after the speech instruction of the user is obtained. The interface includes the icon corresponding to the service indicated by the speech instruction of the user, and a display form of the icon is one or more indexes. Alternatively, according to the method in this embodiment of this application, the icon may be displayed in the target window. For example, one or more icons are originally displayed in the target window, and each icon includes one or more indexes. The user sends a speech instruction based on the one or more indexes of each icon in the target window, where the speech instruction indicates the target index, and the target index belongs to the one or more indexes in the target window. Then, an operation is performed on the target index based on the speech instruction. The index of the icon is displayed in the target window, so that the user can perform a more convenient operation on the interface. The index is simpler and more eye-catching than a specific name of the icon, so that the user does not need to spend too much attention.

It should be understood that, in the method provided in this embodiment of this application, an icon on the interface is originally presented in a form of an index. Alternatively, a switch may be set for an index, and an icon on the interface is presented in a form of the index only after the user turns on the switch. Alternatively, when the user controls the interface by using a speech instruction, an icon on the interface is set to be presented in a form of an index; or when the user controls the interface in a manual manner, or the like, an icon on the interface is not presented in a form of an index.

In addition to the forms of the indexes shown in FIG. 6, in the method in this embodiment of this application, a related label may be attached to the icon with reference to a knowledge graph. Therefore, a form of an index further includes a label. For example, a label "a movie ticket owed to xxx (a name of a movie director)" may be added to an icon of a movie *xxx* (a name of the movie). The user may control a movie control when saying content of the label.

In an existing speech interface control technology, content of an interface currently controlled by the user cannot be sensed. For example, the interface currently controlled by the user is a movie selection interface, and there is a movie on the movie selection interface. A name of the movie may be understood by an intelligent terminal as a speech control instruction with another function, resulting in a misoperation. For example, the name of the movie includes a word "cold". For example, "I am so cold". If the user directly says the name of the movie, the intelligent terminal may identify, based on the speech interface control technology, that the user currently feels cold, and then an air conditioner is turned on to a heating mode. According to the identification method, information about the interface currently controlled by the user can be obtained, to implement a see-and-speak speech control effect. In addition, a multi-interface (window) mode may be supported, to further improve user experience. See-and-speak is also referred to as "what is visible is what you can speak", or "what you see is what you can speak". This means that the user can control the interface by using a speech instruction within a screen range visible to the user, without any manual touch by the user or additional corpus learning costs.

In another implementation, to provide better user experience, the method in this embodiment of this application further includes: setting an operation on a non-entertainment function to be prior to an operation on an entertainment function, to ensure a basic requirement of the user first. The entertainment function includes movie or TV series playing, song playing, and the like. The non-entertainment function includes control on hardware inside the head unit and operations such as making a call, sending a message, and navigation on the head unit interface. In the foregoing scenario, the air conditioner may be preferentially turned on. For another example, when the user sends a speech instruction "Go home", navigation to a residence of the user and corresponding road condition information should be preferentially displayed, instead of playing a song "Go home".

Optionally, the method in this embodiment of this application further includes: setting some services to be preferentially displayed in a specific window when there are a plurality of windows or even a plurality of display screens. For example, if the vehicle includes a plurality of display screens, and one of the display screens is located in front of a baby seat in a rear seat, if the speech instruction of the user is "Play a children's program", the speech instruction may be set to directly act on the display screen in front of the baby seat. In other words, the children's program is preferentially displayed on the display screen in front of the baby seat. For priority adjustment, refer to the foregoing descriptions. For brevity, details are not described herein again.

The following uses a head unit as an example to describe several applications of the interface control method in embodiments of this application with reference to the accompanying drawings. It should be understood that the interface control method in this embodiment of this application may be applied to a scenario in which a same physical screen is split into a plurality of screens; or a scenario in which an intelligent terminal includes a plurality of physical screens, for example, the display screen 101, the central display screen 102, the display screen 103, the display screen 104, and the display screen 105 that are shown in FIG. 1; or a scenario in which there are a plurality of windows on a screen. A screen or a window that is to be controlled by a user is determined with reference to semantic information, line-of-sight information, and/or sound source location of the user. For example, the user sends a speech instruction "Navigate". A navigation interface may be displayed, based on a subjective intention indicated by semantics of the user, on a screen or a window that the user wants to display. Alternatively, a target screen or a target window that is to be controlled by the user may be determined based on line-of-sight information and/or a sound source location of the user, and then a navigation interface is displayed on the target screen or the target window. It should be understood that the foregoing example is merely an example of the interface control method in this embodiment of this application, and does not constitute a limitation on this embodiment of this application.

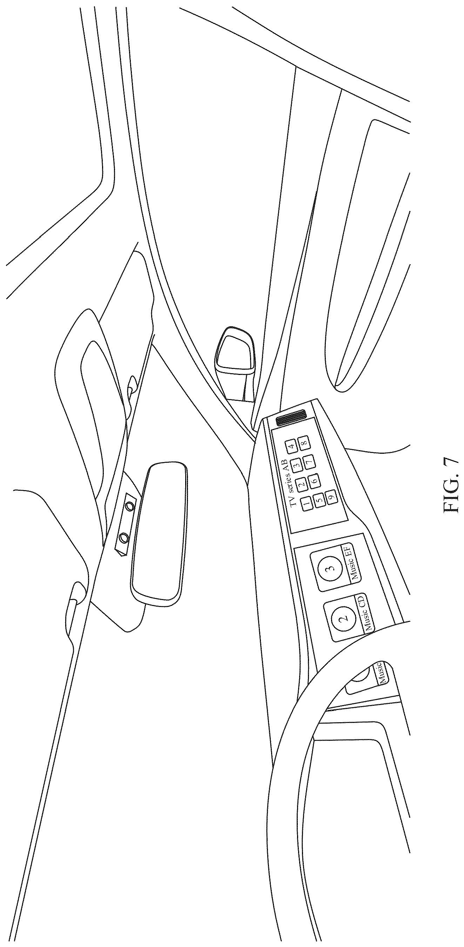

FIG. 7 is a schematic diagram of controlling a heat unit interface by a user in a driver's seat. As shown in FIG. 7, the head unit interface includes a driver screen and a front passenger screen. When the user in the driver's seat sends a speech instruction "Open music", because the user does not subjectively specify whether the speech instruction acts on the driver screen or the front passenger screen, an interface on which an operation is performed by the user may be further determined with reference to a sound source location and line-of-sight information of the user. Specifically, the sound source location and the line-of-sight information of the user are obtained. Because the speech instruction is sent by the user in the driver's seat, a screen closest to the sound source location of the user is the driver screen. Assuming that the user in the driver's seat also looks at the driver screen, it is determined that the interface on which an operation is performed by the user is the driver screen. In this case, an operation is performed on the driver screen based on the speech instruction of the user. In other words, a music application on the driver screen is opened. The driver screen in FIG. 7 shows three icons indicating three different songs. It can be learned from FIG. 7 that a name of each song is small in text. Consequently, it is difficult for the user to quickly recognize the name. In addition, danger may be caused if the user in the driver's seat is distracted for long time in a driving process. Therefore, according to the interface control method in this embodiment of this application, an index of an icon on the interface is displayed, for example, icons ① (an icon 1 is blocked by a steering wheel), ②, and ③ that are on the driver screen in FIG. 7. The icons ①, ②, and ③ are simpler and more eye-catching than texts, and are convenient for the user to recognize. For example, in an actual application, the user may ask "What does the icon ② indicate?" In this case, the speech assistant may answer a name of a song indicated by the icon ②, and then the user makes a selection.

It should be understood that, in an actual application, a head unit screen may alternatively be split screens of an entire screen or split windows. For an operation method, refer to the foregoing descriptions in FIG. 7. Details are not described herein again in this embodiment of this application.

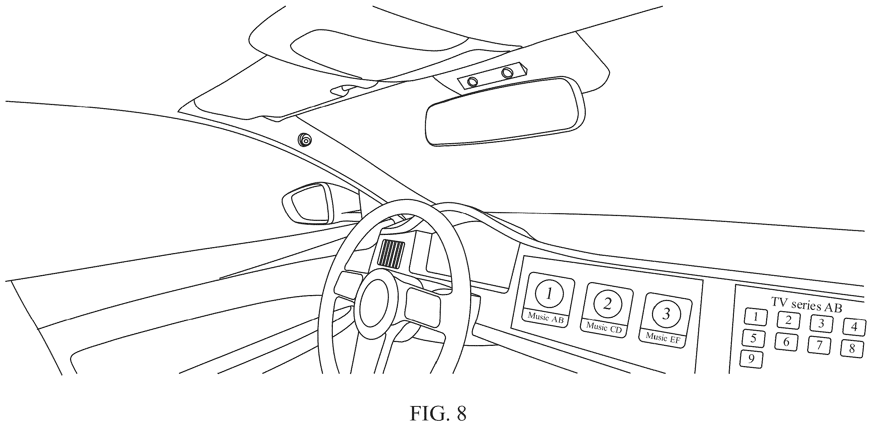

FIG. 8 is a schematic diagram of controlling a heat unit interface by a user in a front passenger's seat. As shown in FIG. 8, the head unit interface includes a driver screen and a front passenger screen. When the user in the front passenger's seat sends a speech instruction "Open music", because the user does not subjectively specify whether the speech instruction acts on the driver screen or the front passenger screen, an interface on which an operation is performed by the user may be further determined with reference to a sound source location and line-of-sight information of the user. Specifically, the sound source location and the line-of-sight information of the user are obtained. Because the speech instruction is sent by the user in the front passenger's seat, a screen closest to the sound source location of the user is the front passenger screen. Assuming that the user looks at the driver screen at this time, an interface determined based on the line-of-sight information of the user is the driver screen. Therefore, the interface determined based on the sound source location is inconsistent with the interface determined based on the line-of-sight information. In this case, the interface needs to be further determined based on a priority of the sound source location and a priority of the line-of-sight information. Assuming that a preset priority is that the sound source location is prior to the line-of-sight information, a determined target interface is the front passenger screen, and the interface on which an operation is performed by the user in the front passenger's seat is the driver screen. In this case, the speech instruction of the user fails to be executed on the front passenger screen, or the speech instruction of the user may be executed on the front passenger screen, but the user sends a speech "Execution error". Therefore, it is determined that the execution fails, and then corresponding priority information is adjusted. For adjustment of the priority information, refer to the foregoing descriptions of S504. Details are not described herein again in this embodiment of this application. After the priority information is adjusted for one or more times, for the user in the front passenger's seat, the line-of-sight information is prior to the sound source location. In this case, when the user in the front passenger's seat sends the speech instruction again, and the interface determined based on the sound source location is inconsistent with the interface determined based on the line-of-sight information, the line-of-sight information of the user in the front passenger's seat has a higher priority.

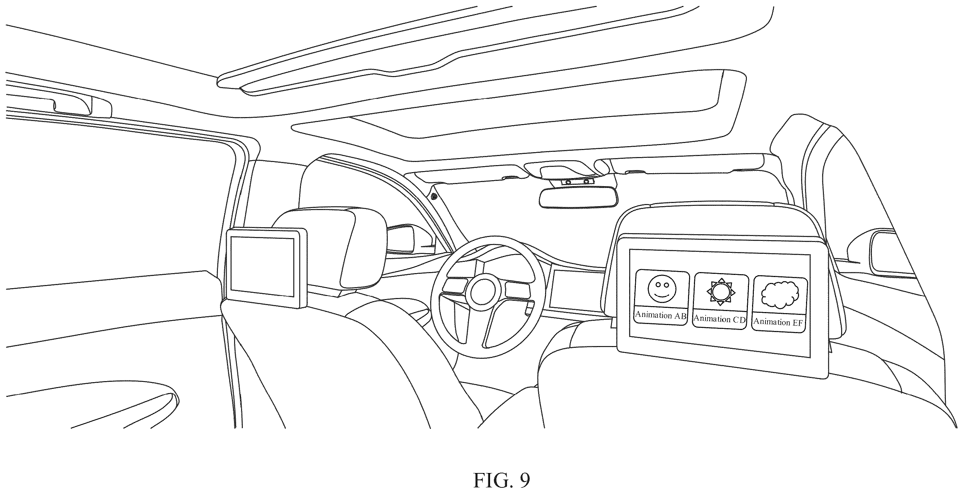

FIG. 9 is a schematic diagram of controlling a rear-row head unit interface by a user in a driver's seat. As shown in FIG. 9, a vehicle includes a plurality of screens. The rear-row head unit interface may be controlled by the user in the driver's seat, or may be controlled by a user in a rear seat. Assuming that a person who often sits in a rear right seat is a child, the user in the driver's seat may set an animation to be preferentially displayed on a head unit interface in front of the rear right seat. For example, the user in the driver's seat may send a speech instruction "Play an animation AB". In this case, although the speech instruction is sent by the user in the driver's seat, and the user in the driver's seat cannot view the head unit interface in front of the rear right seat, the animation AB is played on the head unit interface in front of the rear right seat based on the presetting. To be specific, the multimode information may further include service information. A service (or an application) corresponding to the service information is associated with or corresponds to an interface, and is preferentially displayed on the interface.

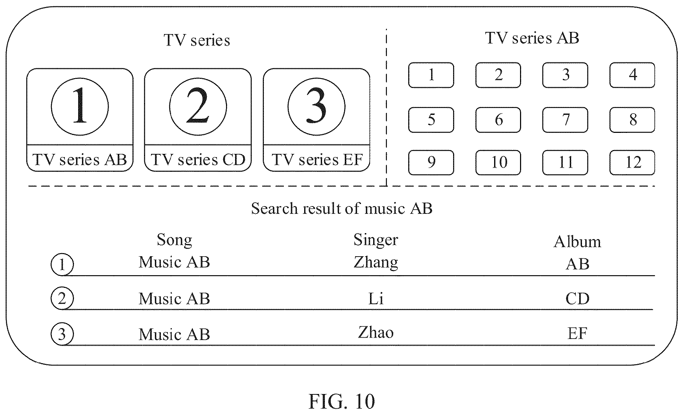

FIG. 7 to FIG. 9 show applications of the interface control method in this embodiment of this application in a plurality of split screens. The interface control method in this embodiment of this application may alternatively be applied to a scenario of an interface having a plurality of windows. FIG. 10 is a schematic diagram of simultaneously displaying three windows on one screen. As shown in FIG. 10, icons of a plurality of TV series are displayed in an upper left window of the screen, specific episodes of a TV series are displayed in an upper right window, and music search icons are displayed in a lower window. In an actual application, a window closest to the sound source location of the user may be determined as a target window, or a window in a line-of-sight direction of the user may be determined as a target window. Specifically, the target window may be determined based on a priority of the sound source location and a priority of the line-of-sight information. For details, refer to the foregoing descriptions of step 504 in FIG. 5. Details are not described herein again in this embodiment of this application.

In conclusion, according to the interface control method in this embodiment of this application, the target window that is to be controlled by the user is determined by using at least two types of multimode information such as speech semantics of the user, the sound source location of the user, the line-of-sight information of the user, and the service information. Then, the target window is controlled based on the speech instruction, so that the user accurately controls the target interface on a plurality of head unit interfaces, to improve user experience. According to the interface control method in this embodiment of this application, it may be further considered that when target windows separately determined based on the semantics, the sound source location, and the line-of-sight information of the user are inconsistent, the target window may be determined based on priorities of the semantics, the sound source location, and the line-of-sight information of the user. This can avoid a case that the speech instruction of the user cannot be executed caused by the fact that the target windows separately determined based on the semantics, the sound source location, and the line-of-sight information of the user are inconsistent. In addition, the priorities of the semantics, the sound source location, and the line-of-sight information of the user may be adjusted based on an execution result, to better adapt to a habit of the user. The interface control method in this embodiment of this application further includes: displaying an index of an icon in the target window. The index of the icon is simpler and more eye-catching than specific text information, to facilitate recognition and selection by the user, reduce a case in which the user is distracted from too much attention, and improve driving safety.

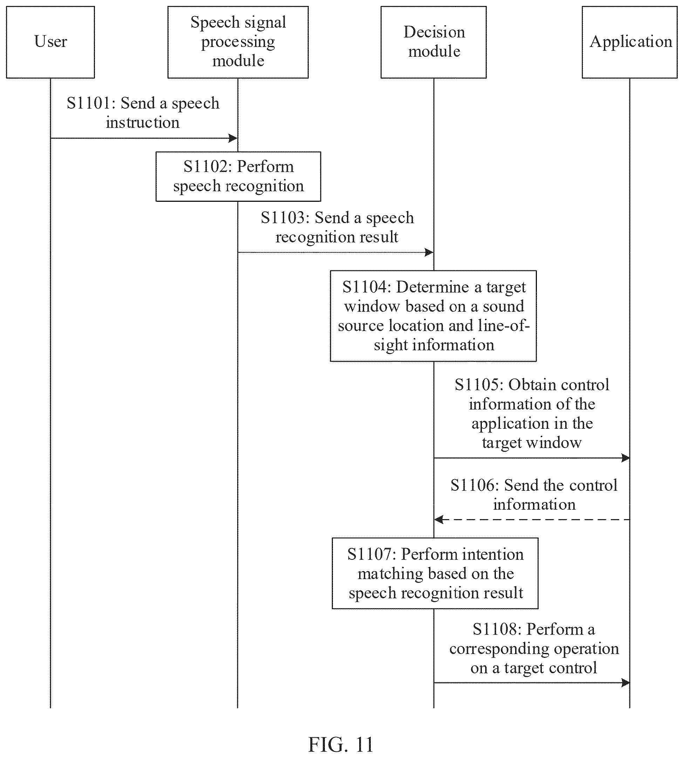

FIG. 11 is a schematic flowchart of controlling an interface by using a speech instruction by a user according to an embodiment of this application. A head unit scenario is used as an example in a scenario in FIG. 11. When a head unit interface is split into screens or has a plurality of interfaces, that the user controls the head unit interface by using a speech instruction includes the following steps.

S1101: Send the speech instruction. The user sends the speech instruction to a speech signal processing module. The speech instruction includes a wake-up instruction and a task instruction, for example, may be "xx (a name of a speech assistant, which may be used as the wake-up instruction), open music (which may be used as the task instruction)". The wake-up instruction and the task instruction may be simultaneously said by using a complete instruction, or may not be simultaneously said by using independent instructions.

S1102: Perform speech recognition. After receiving the speech instruction, the speech signal processing module (which may also be referred to as a speech service module) in a head unit performs semantic recognition on a speech of the user. The semantic recognition may be any existing feasible semantic recognition technology, or may be a semantic recognition technology developed in the future. This is not limited in this embodiment of this application.

S1103: Send a speech recognition result. Then, the speech signal processing module sends a semantic recognition result to a decision module.

S1104: Determine a target window based on a sound source location and line-of-sight information. The decision module determines, based on the obtained sound source location and line-of-sight information, a target window (or interface) in which execution is performed by the user. The sound source location is a sound source location of the speech instruction, and the line-of-sight information is line-of-sight information of the user who sends the speech instruction. For a specific process, refer to the foregoing descriptions in FIG. 5. Details are not described herein again. It should be understood that the sound source location and the line-of-sight information herein may be obtained by sensors such as a microphone and a camera, which are not shown in FIG. 11.

S1105: Obtain control information of an application in the target window. After determining the target window, the decision module obtains the control information of the application in the target window. Optionally, the decision module may send an instruction to the application in the target window, and the application in the target window may perform S1106, in other words, send the control information to the decision module.

S1107: Perform intention matching based on the speech recognition result. The decision module performs intention matching based on the semantic recognition result and the control information of the application in the target window, to determine an intention of the user.

S1108: Perform a corresponding operation on a target control. Then, the decision module performs the corresponding operation on the target control in the target window based on the intention of the user, for example, tapping a corresponding control. In this way, when there are a plurality of interfaces (for example, split screens or a plurality of windows), the user can accurately control applications on the interfaces by using the speech instruction.

Optionally, the user may alternatively first send a wake-up instruction, for example, "xx" (a name of a speech assistant, which may be used as the wake-up instruction). A decision module first determines a target window based on the wake-up instruction of the user and with reference to the sound source location and the line-of-sight information of the user, and then obtains control information of an application in the target window. Then, the speech signal processing module performs semantic recognition with reference to a task instruction sent by the user, for example, "Open music", and sends a semantic recognition result to the decision module. The decision module performs intention matching based on the semantic recognition result and the control information of the application in the target window, to determine an intention of the user, and then performs a corresponding operation on a target control in the target window based on the intention of the user.

Optionally, the method in FIG. 11 further includes: after the control information of the application in the target window is obtained, generating an index of an icon in the target window based on the control information. In this way, the user can control the target window based on the index of the icon.

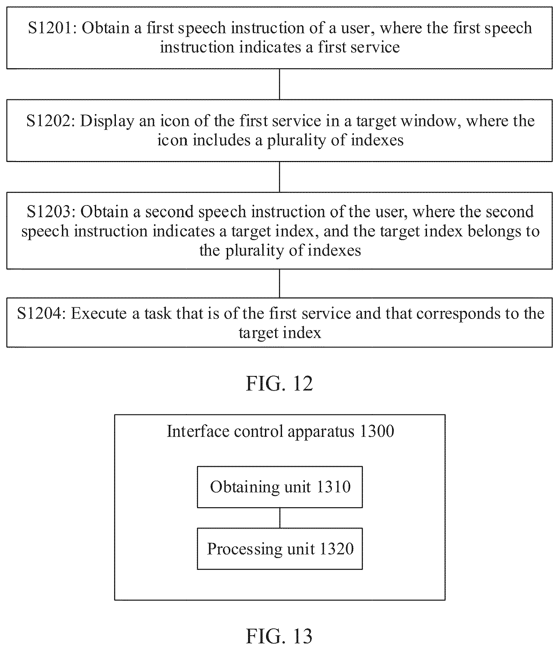

FIG. 12 is a schematic flowchart of another interface control method according to an embodiment of this application. As shown in FIG. 12, the method includes step 1201 to step 1204. For ease of description, control on a head unit interface is still used as an example in an application scenario of the interface control method in the following descriptions. However, it should be understood that the interface control method in this embodiment of this application may alternatively be applied to another multi-interface scenario.

S1201: Obtain a first speech instruction of a user, where the first speech instruction indicates a first service.

Specifically, the user sends a speech instruction to a speech assistant or the like in a head unit. The speech instruction indicates a service of a type or an application. In other words, the first service includes a service type or a service application. Indicating the first service may be understood as indicating a first service type or a first application. Herein, for ease of description, an example in which the service is a music service is used. Certainly, the service may alternatively be a service of another type. A type of the service is not limited in this embodiment of this application. In addition, the speech instruction may directly indicate the service. For example, the speech instruction is "music" or a name of a music application (APP). Alternatively, the speech instruction may indirectly indicate the service. For example, the speech instruction is an operation on the service, to indirectly determine the service. Similarly, a music service is used as an example. The speech instruction may be "Open music" or "Open xx" (a name of a music application).

S1202: Display an icon of the first service in a target window (or interface), where the icon includes a plurality of indexes.

An application corresponding to the first service is opened, based on the speech instruction of the user, in the target window that is to be controlled by the user. When the first service is the service type, the target window may include a plurality of applications. In this case, an application with a greatest priority may be opened, or an application that is running in a background may be opened. The application with the greatest priority may be an application that is most frequently used by the user or an application with the greatest priority set by the user. Alternatively, the plurality of applications are all opened for selection by the user by using an index. When the first service is a specific application, the application may be directly opened. Similarly, a music application is used as an example. The head unit displays a music icon in the target window based on the speech instruction. The icon includes a plurality of indexes. Each index may indicate a song, or each index may indicate an operation on a song, for example, playing, adding to Favorites, or a next song.

S1203: Obtain a second speech instruction of the user, where the second speech instruction indicates a target index, and the target index belongs to the plurality of indexes.

Because the target window gives the user an index selection manner, a requirement on the speech instruction of the user is simplified, so that the speech instruction is simpler and has high recognition accuracy. Therefore, the user may select, from the plurality of indexes, an index consistent with an intention of the user, and send a speech instruction corresponding to the index, for example, a simple numeral or number speech instruction.

For example, the user sends the speech instruction again based on the indexes in the target window, where the speech instruction indicates one of the indexes selected by the user in the target window. For example, the user selects an index of a song, or selects an operation on a song as adding to Favorites.

S1204: Execute a task that is of the first service and that corresponds to the target index.

After obtaining the speech instruction indicating the target index, the head unit may perform an operation corresponding to the speech instruction, in other words, one or more tasks of the first service.

For example, when the target index indicates a song, the song is played. When the target index indicates that the operation on a song is adding to Favorites, the song is added to Favorites.

Optionally, the target window is a window closest to the user or a window in a line-of-sight direction of the user.

According to the interface control method in this embodiment of this application, the user can control, by using a speech, the target window that is to be controlled, without manual touch, which is convenient and safe. This improves user experience. The icon in the target window includes the index, and the speech of the user indicates the target index, so that the user can control the icon in the target window. The index is simpler and more eye-catching than specific text information, to facilitate recognition and selection by the user, avoid the user from distracting too much attention, and improve driving safety in a scenario of control on the head unit interface.

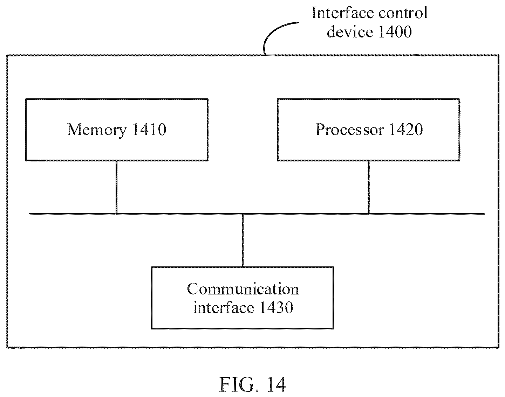

The interface control methods in embodiments of this application are described above in detail with reference to FIG. 1 to FIG. 12. An interface control apparatus provided in embodiments of this application is described below with reference to FIG. 13 and FIG. 14. It should be understood that descriptions of the apparatus embodiments correspond to the descriptions of the method embodiments. Therefore, for content that is not described in detail, refer to the foregoing method embodiments. For brevity, details are not described herein again.

FIG. 13 is a schematic block diagram of an interface control apparatus according to an embodiment of this application. The apparatus 1300 may be specifically a chip, an in-vehicle apparatus, a vehicle, or the like. The apparatus 1300 includes an obtaining unit 1310 and a processing unit 1320. The obtaining unit 1310 may implement a corresponding communication function, and the processing unit 1320 is configured to process data. The obtaining unit 1310 may also be referred to as a communication interface or a communication unit. Specifically, when the apparatus 1300 is the vehicle shown in FIG. 1, the obtaining unit 1310 may be the sensing system 120 in FIG. 1 or a unit configured to implement a function of the sensing system 120, and the processing unit 1320 may be the computing platform 150 in FIG. 1 or a unit configured to implement a function of the computing platform 150.

Optionally, the apparatus 1300 may further include a storage unit. The storage unit may be configured to store instructions and/or data. The processing unit 1320 may read the instructions and/or data in the storage unit, so that the apparatus implements the foregoing method embodiments.

The apparatus 1300 may be configured to perform actions in the foregoing method embodiments. Specifically, the obtaining unit 1310 is configured to perform an obtaining-related operation in the foregoing method embodiments, and the processing unit 1320 is configured to perform a processing-related operation in the foregoing method embodiments.

The apparatus 1300 may implement steps or procedures corresponding to the method embodiments in embodiments of this application. The apparatus 1300 may include units configured to perform the methods in FIG. 5 and FIG. 12. In addition, the units in the apparatus 1300 and the foregoing other operations and/or functions are separately used to implement corresponding procedures in the method embodiments on a second node side in FIG. 5 and FIG. 12.

When the apparatus 1300 is configured to perform the method 500 in FIG. 5, the transceiver unit 1310 may be configured to perform step 501 and step 502 in the method 500; and the processing unit 1320 may be configured to perform processing step 503 and step 504 in the method 500.

Specifically, the obtaining unit 1310 is configured to obtain a speech instruction of a user and a sound source location of the user. The obtaining unit 1310 is further configured to obtain line-of-sight information of the user. The processing unit 1320 is configured to determine a target window on an interface based on the sound source location and the line-of-sight information. The processing unit 1320 is further configured to control the target window based on the speech instruction.

In some possible implementations, the target window is closest to the sound source location and is located in a line-of-sight direction indicated by the line-of-sight information.

In some possible implementations, a window closest to the sound source location is a first window, and a window located in the line-of-sight direction indicated by the line-of-sight information is a second window. The processing unit 1320 is specifically configured to determine the target window based on a priority of the sound source location and a priority of the line-of-sight information. The priorities are predefined. When the sound source location is prior to the line-of-sight information, the first window is the target window; or when the line-of-sight information is prior to the sound source location, the second window is the target window.

In some possible implementations, the sound source location has first priority information, the line-of-sight information has second priority information. The first priority information is used to determine the priority of the sound source location, and the second priority information is used to determine the priority of the line-of-sight information.

In some possible implementations, there is a first correlation between the sound source location and a service indicated by the speech instruction, and there is a second correlation between the line-of-sight information and the service indicated by the speech instruction.

In some possible implementations, the apparatus 1300 is further configured to: obtain an execution result of the speech instruction; adjust the first priority information and the second priority information based on the execution result; and adjust the first correlation and the second correlation based on the execution result.

In some possible implementations, the speech instruction indicates an icon. The processing unit 1320 is specifically configured to display the icon in the target window, where the icon includes one or more indexes.

In some possible implementations, the apparatus 1300 is further configured to display an icon in a target window, where the icon includes one or more indexes. The speech instruction indicates a target index, and the target index belongs to the one or more indexes.

When the apparatus 1300 is configured to perform the method 1200 in FIG. 12, the transceiver unit 1310 may be configured to perform step 1201 and step 1203 in the method 1200; and the processing unit 1320 may be configured to perform processing step 1202 and step 1204 in the method 1200.

Specifically, the obtaining unit 1310 is configured to obtain a first speech instruction of a user, where the first speech instruction indicates a first service. The processing unit 1320 is configured to display an icon of the first service in the target window, where the icon includes a plurality of indexes. The obtaining unit 1310 is further configured to obtain a second speech instruction of the user, where the second speech instruction indicates the target index, and the target index belongs to the plurality of indexes. The processing unit 1320 is further configured to execute a task that is of the first service and that corresponds to the target index.

In some possible implementations, the target window is a window closest to the user or a window in a line-of-sight direction of the user.

It should be understood that a specific process in which the units perform the foregoing corresponding steps is described in detail in the foregoing method embodiments. For brevity, details are not described herein.

As shown in FIG. 14, an embodiment of this application further provides an interface control device 1400. A computing device 1400 shown in FIG. 14 may include a memory 1410, a processor 1420, and a communication interface 1430. The memory 1410, the processor 1420, and the communication interface 1430 are connected through an internal connection path. The memory 1410 is configured to store instructions. The processor 1420 is configured to execute the instructions stored in the memory 1420, to control the communication interface 1430 to receive an input sample or send a prediction result. Optionally, the memory 1410 may be coupled to the processor 1420 through an interface, or may be integrated with the processor 1420. The interface control device 1400 may be the vehicle 100 shown in FIG. 1. The communication interface 1430 may be the sensing system 120 in FIG. 1, configured to implement step 501 and step 502 in FIG. 5. The processor 1420 may be the computing platform 150 in FIG. 1, configured to implement step 503 and step 504 in FIG. 5.

It should be noted that the communication interface 1430 implements communication between the communication device 1400 and another device or a communication network by using, for example but not limited to, a transceiver apparatus such as a transceiver. The communication interface 1430 may further include an input/output interface (input/output interface).

In an implementation process, the steps in the foregoing methods can be implemented by using an integrated logic circuit of hardware in the processor 1420, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1410, and the processor 1420 reads information in the memory 1410 and completes the steps in the foregoing methods in combination with hardware in the processor 1420. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. A part of the processor may further include a non-volatile random access memory. For example, the processor may further store information of a device type.

An embodiment of this application further provides a chip. The chip includes a processor and a data interface. The processor reads, through the data interface, instructions stored in a memory to perform the method in FIG. 5 or FIG. 12.

Further embodiments of the present invention are provided in the following. It should be noted that the numbering used in the following section does not necessarily need to comply with the numbering used in the previous sections.
Embodiment 1. An interface control method, comprising:
   obtaining a speech instruction of a user and a sound source location of the user;
   obtaining line-of-sight information of the user;
   determining a target window on an interface based on the sound source location and the line-of-sight information; and
   controlling the target window based on the speech instruction.
Embodiment 2. The method according to embodiment 1, wherein the target window is closest to the sound source location and is located in a line-of-sight direction indicated by the line-of-sight information.
Embodiment 3. The method according to embodiment 1, wherein a window closest to the sound source location is a first window, a window in the line-of-sight direction indicated by the line-of-sight information is a second window, and the determining a target window on an interface based on the sound source location and the line-of-sight information comprises:
   determining the target window based on a priority of the sound source location and a priority of the line-of-sight information, wherein when the priority of the sound source location is higher than the priority of the line-of-sight information, the first window is the target window; or when the priority of the line-of-sight information is higher than the priority of the sound source location, the second window is the target window.
Embodiment 4. The method according to embodiment 3, wherein the priority of the sound source location and the priority of the line-of-sight information are predefined.
Embodiment 5. The method according to embodiment 4, wherein the sound source location has first priority information, the line-of-sight information has second priority information, the first priority information is used to determine the priority of the sound source location, and the second priority information is used to determine the priority of the line-of-sight information.
Embodiment 6. The method according to embodiment 5, wherein the method further comprises: obtaining an execution result of the speech instruction; and
   adjusting the first priority information and the second priority information based on the execution result.
Embodiment 7. The method according to any one of embodiments 3 to 6, wherein there is a first correlation between the sound source location and a service indicated by the speech instruction, and there is a second correlation between the line-of-sight information and the service indicated by the speech instruction.
Embodiment 8. The method according to embodiment 7, further comprising:
   adjusting the first correlation and the second correlation based on the execution result of the speech instruction.
Embodiment 9. The method according to any one of embodiments 1 to 8, wherein the controlling the target window based on the speech instruction comprises:
   displaying, in the target window, an icon corresponding to the service indicated by the speech instruction, wherein the icon comprises one or more indexes.
Embodiment 10. The method according to any one of embodiments 1 to 9, wherein the method further comprises:
   displaying, in the target window, an icon corresponding to a first service, wherein the icon comprises one or more indexes, the speech instruction indicates a target index, the target index belongs to the one or more indexes, and the controlling the target window based on the speech instruction comprises:
   performing a target operation that is of the first service and that is indicated by the target index.
Embodiment 11. An interface control method, comprising:
   obtaining a first speech instruction of a user, wherein the first speech instruction indicates a first service;
   displaying an icon of the first service in a target window, wherein the icon comprises a plurality of indexes;
   obtaining a second speech instruction of the user, wherein the second speech instruction indicates a target index, and the target index belongs to the plurality of indexes; and
   executing a task that is of the first service and that corresponds to the target index.
Embodiment 12. The method according to embodiment 11, wherein the target window is a window closest to the user or a window in a line-of-sight direction of the user.
Embodiment 13. An interface control apparatus, comprising:
   an obtaining unit, configured to obtain a speech instruction of a user and a sound source location of the user, wherein
   the obtaining unit is further configured to obtain line-of-sight information of the user; and
   a processing unit, configured to determine a target window on an interface based on the sound source location and the line-of-sight information, wherein
   the processing unit is further configured to control the target window based on the speech instruction.
Embodiment 14. The apparatus according to embodiment 13, wherein the target window is closest to the sound source location and is located in a line-of-sight direction indicated by the line-of-sight information.
Embodiment 15. The apparatus according to embodiment 13, wherein a window closest to the sound source location is a first window, a window in the line-of-sight direction indicated by the line-of-sight information is a second window, and the processing unit is specifically configured to: determine the target window based on a priority of the sound source location and a priority of the line-of-sight information, wherein when the priority of the sound source location is higher than the priority of the line-of-sight information, the first window is the target window; or when the priority of the line-of-sight information is higher than the priority of the sound source location, the second window is the target window.
Embodiment 16. The apparatus according to embodiment 15, wherein the priority of the sound source location and the priority of the line-of-sight information are predefined.
Embodiment 17. The apparatus according to embodiment 16, wherein the sound source location has first priority information, the line-of-sight information has second priority information, the first priority information is used to determine the priority of the sound source location, and the second priority information is used to determine the priority of the line-of-sight information.
Embodiment 18. The apparatus according to embodiment 17, wherein the apparatus is further configured to:
   obtain an execution result of the speech instruction; and
   adjust the first priority information and the second priority information based on the execution result.
Embodiment 19. The apparatus according to any one of embodiments 15 to 18, wherein there is a first correlation between the sound source location and a service indicated by the speech instruction, and there is a second correlation between the line-of-sight information and the service indicated by the speech instruction.
Embodiment 20. The apparatus according to embodiment 19, wherein the processing unit is further configured to:
   adjust the first correlation and the second correlation based on the execution result of the speech instruction.
Embodiment 21. The apparatus according to any one of embodiments 13 to 20, wherein the processing unit is specifically configured to:
   display, in the target window, an icon corresponding to the service indicated by the speech instruction, wherein the icon comprises one or more indexes.
Embodiment 22. The apparatus according to any one of embodiments 13 to 21, wherein the processing unit is further configured to:
   display, in the target window, an icon corresponding to a first service, wherein the icon comprises one or more indexes, the speech instruction indicates a target index, the target index belongs to the one or more indexes, and the controlling the target window based on the speech instruction comprises:
   performing a target operation that is of the first service and that is indicated by the target index.
Embodiment 23. An interface control apparatus, comprising:
   an obtaining unit, configured to obtain a first speech instruction of a user, wherein the first speech instruction indicates a first service; and
   a processing unit, configured to display an icon of the first service in a target window, wherein the icon comprises a plurality of indexes, wherein
   the obtaining unit is further configured to obtain a second speech instruction of the user, the second speech instruction indicates a target index, and the target index belongs to the plurality of indexes; and
   the processing unit is further configured to execute a task that is of the first service and that corresponds to the target index.
Embodiment 24. The apparatus according to embodiment 23, wherein the target window is a window closest to the user or a window in a line-of-sight direction of the user.
Embodiment 25. An interface control apparatus, comprising a processor and a memory, wherein the memory is configured to store program instructions, and the processor is configured to invoke the program instructions to perform the method according to any one of embodiments 1 to 10 or either of embodiments 11 and 12.
Embodiment 26. An interface control apparatus, wherein the apparatus comprises a processor and a data interface, and the processor reads, through the data interface, instructions stored in a memory, to perform the method according to any one of embodiments 1 to 10 or either of embodiments 11 and 12.
Embodiment 27. A vehicle, comprising the apparatus according to any one of embodiments 13 to 22 or either of embodiments 23 and 24.

An embodiment of this application further provides a computing device. The computing device includes: a memory, configured to store a computer program; and a processor, configured to invoke the computer program from the memory. When the computer program is executed, the computing device is enabled to perform the method in FIG. 5 or FIG. 12.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the Internet interacting with other systems by using the signal).

A person of ordinary skill in the art may be aware that units and algorithm steps in the examples described with reference to embodiments disclosed in this specification can be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interface control method, comprising:
obtaining a first speech instruction of a user, wherein the first speech instruction comprises at least one of a wake-up instruction or a task instruction;
displaying an icon in a target window, wherein the target window is a window closest to the user or a window in a line-of-sight direction of the user and the icon comprises a plurality of indexes;
obtaining a second speech instruction of the user, wherein the second speech instruction indicates a target index, and the target index belongs to the plurality of indexes; and
executing a task that corresponds to the target index.

2. The method according to claim 1, comprising:
obtaining a sound source location of the first speech instruction or the second speech instruction;
obtaining line-of-sight information of the user who sends the first speech instruction or the second speech instruction;
determining the target window on an interface based on the sound source location and the line-of-sight information.

3. The method according to claim 1 or 2, comprising:
obtaining control information of an application in the target window;
determining an intention of the user based on the semantic recognition result of the first speech instruction and the control information in the target window;
performing an operation on the target control in the target window based on the intention of the user.

4. The method according to any one of claims 1 to 3, wherein the first speech instruction indicates a first service, the method further comprises:
executing a task that is of the first service and that corresponds to the target index.

5. The method according to any one of claims 1 to 4, wherein the target window is a window on which the duration of the line of sight of the user stays is greater than a preset threshold.

6. The method according to any one of claims 1 to 5, wherein the target window is a window which is closest to the sound source location of the user and is located in a line-of-sight direction indicated by the line-of-sight information of the user.

7. The method according to any one of claims 1 to 6, wherein a window closest to the sound source location is a first window, a window in the line-of-sight direction indicated by the line-of-sight information is a second window, and the method further comprises:
determining the target window based on a priority of the sound source location and a priority of the line-of-sight information, wherein when the priority of the sound source location is higher than the priority of the line-of-sight information, the first window is the target window; or when the priority of the line-of-sight information is higher than the priority of the sound source location, the second window is the target window.

8. The method according to claim 7, wherein the priority of the sound source location and the priority of the line-of-sight information are predefined.

9. The method according to claim 8, wherein the sound source location has first priority information, the line-of-sight information has second priority information, the first priority information is used to determine the priority of the sound source location, and the second priority information is used to determine the priority of the line-of-sight information.

10. The method according to claim 9, wherein the method further comprises:
obtaining an execution result of the first speech instruction; and
adjusting the first priority information and the second priority information based on the execution result.

11. The method according to any one of claims 7 to 10, wherein there is a first correlation between the sound source location and a service indicated by the first speech instruction, and there is a second correlation between the line-of-sight information and the service indicated by the first speech instruction.

12. The method according to claim 11, further comprising:
adjusting the first correlation and the second correlation based on the execution result of the speech instruction.

13. An interface control apparatus, comprising a processor and a memory, wherein the memory is configured to store program instructions, and the processor is configured to invoke the program instructions to perform the method according to any one of claims 1 to 12.
